# EUROPEAN PATENT APPLICATION

(11) **EP 0 571 074 A2**
(43) Date of publication of application: **24.11.1993**
(21) Application number: 93302543.9
(22) Date of filing: 31.03.1993
(51) Int. Cl.: C08L 29/04

(54) **Process for preparing an oriented composition based on ethylene vinyl alcohol copolymer and oriented product thereof**

(30) Priority: 21.05.1992 US 909513; 21.08.1992 US 933449
(71) Applicant: MORTON INTERNATIONAL, INC., Chicago Illinois 60606-1596 (US)
(72) Inventor: Shida, Mitsu, Barrington, Illinois 60010 (US); Pucci, Mark S., Elk Grove Village, Illinois 60007 (US)
(74) Representative: Bankes, Stephen Charles Digby

(57) **Abstract**

Ethylene/vinyl alcohol copolymer is melt blended with between 1 and 15 wt % of polyolefin that is grafted with a carboxylic acid or carboxylic acid anhydride containing monomer. The blend is formed into an article and then oriented by expansion at a temperature below the melting temperature of the ethylene/vinyl alcohol copolymer. The inclusion of the grafted polyolefin improves the orientability of the ethylene/vinyl alcohol copolymer without seriously detracting from its gas barrier properties.

## Description

The present invention is directed to a method of preparing an oriented, ethylene/vinyl alcohol copolymer composition and to the oriented product obtained thereby.

It is well known that ethylene/vinyl alcohol copolymer (EVOH) has excellent gas barrier properties and is widely used in applications where protection from oxygen is required. The most common use for EVOH is food packaging, where EVOH, either by itself or as part of a multilayer structure, is used to protect the food from spoilage by oxygen. In many applications, it is desirable to orient EVOH-containing structures. For example, it is desirable to use EVOH in films or sheets which are later thermoformed to produce three-dimensional packaging. Likewise, although the gas barrier properties of EVOH-containing structures manufactured by conventional extrusion methods are very good, it is known that gas barrier properties can be improved by a solid or semi-solid state orientation process. For practical purposes, orientation of this sort is limited to EVOH structures in the form of strands, tubes, films or sheets, either as a monolayer structure or as a laminate with other layers. Ethylene/vinyl alcohol copolymer is furthermore quite susceptible to degradation by moisture, and orientation improves its resistance to moisture.

The orientability of EVOH, however, is quite limited. Herein orientation is defined as a ratio of the expanded size to the original size of the article. Thus when orienting the polymer in a linear direction, the orientation ratio is the ratio of the expanded length to the pre-expanded length. When expanding the polymer in two directions, the ratio is the product of the expansion in each direction (often the same in each direction) to the original size. Because ethylene/vinyl alcohol is a hard, glassy polymer, it is more difficult to orient than some polymers. The orientation ratio for EVOH (without breakage or creation of microholes) is lower than many thermoplastic materials, such as nylon. In some applications it would be desirable to increase the possible maximum orientation ratio. For example, in shrink-packaging applications, it is generally desirable to expand a film or sheet to a high orientation ratio and then shrink back to a smaller, but still expanded and oriented size. Even in applications where a high orientation ratio is not required, it is still highly desirable that orientation be achieved at faster orientation rates and/or at lower temperatures. It is a primary object of the present invention to improve the orientability of EVOH while, at the same time, preserving its high barrier properties.

In accordance with the invention, in a process for providing an oriented composition based upon ethylene/vinyl alcohol copolymer (EVOH), the EVOH is melt-blended with between about 1 and about 15 wt. % polyolefin, preferably between about 5 and about 15 wt. %, such polyolefin having grafted upon it carboxylic acid or anhydride group-containing moieties. The blend is formed into articles, such as films, sheets or strands, either as a monolayer or a laminate structure. At a temperature below the melting temperature of the EVOH, the article is oriented by expansion, e.g., biaxially in the case of a film or sheet, or linearly in the case of a strand. The invention further provides an oriented article formed by the process.

The invention is directed to ethylene/vinyl alcohol copolymer-based compositions in which the ethylene/vinyl alcohol copolymer (EVOH) forms a continuous phase and wherein the grafted polyolefin exists as discrete domains fully surrounded by the continuous EVOH phase. Because polyolefins, including grafted polyolefins, are very poor gas barriers, it is important that polyolefin exits as domains in the oriented material, thereby limiting any detrimental effect on gas barrier properties of the continuous EVOH phase. The process and product of the invention can be distinguished from processes and products, such as those taught in U.S. Patent No. 4,362,844, in which the polyolefin or grafted polyolefin comprises the major portion of the composition and in which the polyolefin or grafted polyolefin forms a continuous phase having discrete domains of EVOH contained therein. Gas barrier properties of compositions in which EVOH comprises the continuous phase are much greater than gas barrier properties of compositions in which a polyolefin comprises the continuous phase.

The invention is likewise to be distinguished from blends of EVOH and a miscible or semi-miscible polymer, such as nylon (polyamide). Herein, miscible or semi-miscible polymers are considered to be "compatible" with EVOH, whereas polyolefins and even grafted polyolefins, which form discrete domains when blended to any appreciable level in EVOH form discrete domains, for purposes of the present invention, are herein considered to be "incompatible" with EVOH. It is surprising to one skilled in the art that a grafted polyolefin substantially enhances the orientability of EVOH as one would not expect this property from an incompatible polymer. In fact, one would expect that discrete domains of an incompatible polymer would diminish the ability of the predominant polymer (EVOH) to be streched and that the grafted polyolefin domains would increase the likelihood of early film failure. In fact, this is exactly the case when comparable amounts of ungrafted polyolefin is blended with EVOH. In such compositions the film fails almost immediately upon stretching.

By EVOH is meant, herein, a copolymer of ethylene (between about 20 and about 50 mole percent) and a vinyl ester, e.g., vinyl acetate (between about 50 and about 80 mole percent) which has been substantially saponified (at least about 90 percent) subsequent to polymerization.

Generally any polyolefin, including olefin homopolymers and olefin copolymers, may be used in accordance with the present invention. Suitable monomers for forming the olefins include, but are not limited to, ethylene, propylene, 1-butene, 1-hexene, and 4-methyl-1-pentene.

It is necessary that the polyolefin be grafted with a carboxylic acid or acid anyhdride group-containing moiety in order that the polyolefin domains adhere strongly to the EVOH phase. Suitable carboxylic acid group-containing monomers for grafting to polyolefins are unsaturated carboxylic acids and carboxylic acid anhydrides, such as maleic anhydride, citraconic anhydride, fumaric acid, acrylic acid, methacrylic acid, glycidyl acrylate, hydroxy methacrylate, their derivatives and mixtures thereof. Preferred grafting monomers are multi-carboxylic acid functional acids and anhydrides, with maleic anhydride being a particularly preferred grafting monomer.

Generally the level of ionic monomer grafted to an olefin polymer or copolymer is in the range of about .1 to about 10 wt. % based on the weight of the ungrafted polyolefin, generally .5 to 5 wt. %. To achieve a desired level of acid or anydride functionality, it is common to graft a higher level of the monomer to a small amount of polyolefin and then blend the grafted polyolefin with an additional portion of unmodified polyolefin.

Surprisingly and unexpectedly, a minor portion of the polyolefin, i.e., between about 1 and about 15 wt. percent, preferably between about 5 and about 15 wt. percent, based on total polymer in the composition, substantially improves the orientability of EVOH. This may take the form of achieving a higher orientation ratio, allowing the material to be oriented more rapidly, or allowing the material to be oriented at a lower temperature. The amount of enhanced orientability required will determine the amount of the polyolefin composition to be added to the EVOH, the improvement being generally a function of the level of the polyolefin. Generally, at least about 1 wt. percent of the polyolefin is required to noticeably improve the orientability, and usually levels of 5 wt. percent or more are preferred. For any particular compatibilized polyolefin Formulation, there usually exists an upper limit, beyond which orientability levels off or even decreases. It is typical that at a level of between about 10 and about 15 wt. percent of grafted polyolefin, maximum orientability of the EVOH is reached or approached. Beyond this maximum or near maximum orientability level, additional amounts of grafted polyolefin are disadvantageous. Additional grafted polyolefin level increases the likelihood of polyolefin domains extending entirely through the material, particularly after the material is thinned through orientation. Accordingly, the material in accordance with the invention is limited to about 15% by weight grafted polyolefin content.

Although orientation begins incrementally with any stretching at all, for purposes of this invention an oriented film, sheet, or strand is considered to be one that has been expanded to an orientation ratio of at least about 2:1. In practice, films and sheets are generally expanded to orientation ratios in excess of about 5:1, and in accordance with the present invention, films and sheets may even be expanded to orientation ratios in excess of about 10:1. As mentioned above, for some applications, it is desirable to achieve a greater orientation ratio than has heretofore been achieved with EVOH. Even where a high orientation ratio is not required, benefits accrue from compositions in accordance with the present invention as the blended, grafted polyolefin permits more rapid orientation or allows orientation at lower temperatures. More rapid orientation and/or orientation at lower temperatures contribute to lessening the cost of producing oriented EVOH articles.

Articles, such as films, sheets or strands, of the EVOH blends in accordance with the present invention are produced by normal melt-processing processes, e.g., extrusion, generally in a temperature range of between about 380°F and about 450°F (193°C - 232°C). Likewise, orientation is done using common techniques. Tenter frames, for example, are used for biaxial orientation. Orientation is generally done at temperatures that are somewhat elevated, but somewhat below the melt temperature of the EVOH blend. If it is intended that the oriented material be used in shrink-packaging applications, orientation is effected at a temperature close to the intended shrink-wrap temperature. It is even possible to orient at normal ambient temperatures or below, although the slowness of the process at ambient temperatures generally makes this impractical.

The invention will now be described in greater detail by way of specific example.

### Example

Films or sheets of EVOH sold under the tradename SOARNOL DC and a film or sheet of the same EVOH blended 90:10 parts by weight with high density polyethylene modified with 2 wt. % maleic anhydride were formed, each being 75 microns thick. Each film or sheet was subjected to 2 x 2 biaxial orientation at 90°C at speeds of 30 and 100 mm/min. The oxygen transmission rate was measured in each case before and after orientation. The results are as follows:

| | before orientation | 30 mm/min | 100 mm/min |
|---|---|---|---|
| EVOH | 0.31 | failed | failed |
| EVOH/ mod.HPDE | 0.47 | 0.03 | 0.08 |

## Claims

1. A method of preparing an oriented article comprising:
melt blending between 85 and 99 wt percent of ethylene/vinyl alcohol copolymer and between 1 and 15 wt percent grafted polyolefin, said grafted polyolefin being an olefin homopolymer or copolymer to which is grafted between .1 to 10 wt %, based upon the weight of the ungrafted polyolefin of a carboxylic acid or anhydride group-containing monomer, forming said blend into a solid article, and expanding said article to orient the same.

2. A method according to Claim 1 wherein said grafted polyolefin comprises between 5 and 15 wt % of the total polymer.

3. A method according to Claim 1 or Claim 2 wherein said article is expanded to an orientation ratio of at least 2:1.

4. A method according to Claim 3 wherein said article is expanded to an orientation ratio of at least 5:1.

5. A method according to Claim 4 wherein said article is expanded to an orientation ratio of at least 10:1.

6. A method according to any preceding claim wherein said monomer is a multi-functional carboxylic acid or carboxylic acid anhydride.

7. A method according to Claim 6 wherein said monomer is a maleic anhydride.

8. A method according to any preceding claim wherein said monomer is grafted at between .5 and 5 wt % relative to the weight of ungrafted polyolefin.
